# EUROPEAN PATENT SPECIFICATION

(11) **EP 0 884 919 B1**
(45) Date of publication and mention of the grant of the patent: **05.10.2005**
(21) Application number: 98304042.9
(22) Date of filing: 21.05.1998
(51) Int. Cl.: H04Q 7/38

(54) **User assisted wireless fraud detection**
Benutzerunterstützte schnurlose Betrugserkennung
Détection de fraude dans un système sans fil assisté par l'utilisateur

(30) Priority: 12.06.1997 US 969098
(43) Date of publication of application: 16.12.1998
(73) Proprietor: AT&T WIRELESS SERVICES, INC., New York 10013-2412 (US)
(72) Inventor: Cosatto, Eric, Highlands, New Jersey 07732 (US); Graf, Hans Peter, Lincroft, New Jersey 07738 (US)
(74) Representative: Asquith, Julian Peter

(56) References cited:
- EP-A- 0 163 358
- WO-A-98/31175

## Description

### Field of the Invention

This invention relates generally to wireless fraud detection and more particularly to a method for user assisted wireless fraud detection.

### Background of the Invention

The unauthorized and/or illegal use of a wireless telephone or a wireless communication network (i.e. fraud) is a major problem in the wireless telephone industry. Worldwide losses due to fraud are in billions of dollars per year.

Generally, a wireless telephone is identified by an electronic serial number (ESN) and a mobile identification number (MIN). This ESN/MIN pair uniquely identifies every wireless telephone. When accessing a wireless communication network, the telephone sends its ESN/MIN pair to the communication network, which then provides service to the telephone if the ESN/MIN pair corresponds to an authorized subscriber account.

One fraud technique is cloning, in which a second, or clone, telephone is programmed with the same ESN/MIN pair of an authorized telephone. The network recognizes the cloned telephone as an authorized telephone, and allows the cloned telephone to access the network. Valid ESN/MIN pairs, for use in cloned telephones, may be obtained in several ways. One way is by reading these values from an authorized telephone. Another way is through the use of eavesdropping equipment which reads the ESN/MIN pairs of authorized telephones being transmitted over the air interface during use of an authorized telephone. Many cloned telephones having the same ESN/MIN pair can be produced resulting in a large amount of fraudulent use in a relatively short time period.

There are two ways to deal with fraud. The first is fraud prevention, which is aimed at preventing fraud before it happens. The other is fraud detection, which is aimed at detecting, and stopping, fraud which has already occurred. Fraud prevention is the preferred technique because it stops fraud before losses are incurred. Various techniques are currently used for fraud prevention. For example, requiring the use of a personal identification number (PIN) before access to the network is allowed. This technique is losing its effectiveness since the eavesdropping equipment is capable of reading PINs transmitted over the air interface. Another technique for fraud prevention is voice verification, where the network engages the telephone user in a voice verification process to validate the particular user. This technique is not widely used because of the limitations of voice recognition technology. Another fraud prevention technique is RF fingerprinting, wherein the radio frequency transmission characteristics of an authorized mobile telephone with a particular MIN are stored in a database. When a telephone attempts to access the system using the particular MIN, the radio frequency transmission characteristics of the telephone are compared against the radio frequency transmission characteristics stored in the database. If the transmission characteristics differ significantly then the mobile telephone may be identified as fraudulent. Most recently, the technique of authentication is the preferred method of fraud prevention. This is a sophisticated technique in which the network engages the telephone in a challenge-response process whereby the network can verify that the particular telephone is authorized to access the network. Eavesdropping equipment cannot detect any useful information by reading information from the air interface during authentication.

Although authentication promises to be an effective tool against wireless fraud, history shows that fraudsters have been able to keep up with technology and will eventually be able to clone telephones which are protected using the authentication scheme. This leads to the conclusion that no matter how sophisticated the fraud prevention scheme, fraud detection techniques will always be needed as well.

One type of fraud detection technique is a profiling system, in which the communication system stores user profiles in the system. These user profiles contain information on the type of usage generally made by a particular telephone. For example, a particular telephone profile may indicate that the telephone is generally used between the hours of 8am and 8pm, Monday through Friday, and is generally used to call telephone numbers within the United States. If the communication system detects a call being made with that telephone's ESN/MIN pair at 2am on a Saturday night to a telephone number in South America, the communication system may flag that call as suspicious. The communication service provider may then follow up and investigate the call. Another type of fraud detection is velocity checking where sequential calls are analyzed to determine if a single phone could have made the calls. For example, if the communication system handles a call for a telephone located in Seattle, Washington at 9am, and then handles a call for a telephone with the same ESN/MIN pair at 9:02am in Spokane, Washington, the communication system recognizes that a single telephone could not have been used for both calls and the system may flag the call as suspicious and the communication service provider may then follow up and investigate the call.

These fraud detection schemes are limited in that they can only detect certain type of fraudulent use of cloned telephones. What is needed is a more effective fraud detection technique.

PCT Application WO 98/311175 A2, published late on 16 July 1998, discusses a wireless system that sends information about a previous communication to a wireless device to aid in identifying fraudulent communication. The home location register sends the information to the wireless device and the service provider relies on the user to report fraud.

### Summary of the Invention

In accordance with the present invention there is provided a method and wireless system for detecting fraud on a wireless subscriber account, as set out in the accompanying claims.

The present invention provides a way for a mobile switching center to access data in a database, transmit that data to a wireless device, and receive data from the wireless device indicating whether a previous access was fraudulent. By using the mobile switching center for transmitting data and receiving data regarding previous calls, the present technology avoids relying on a user to report the fraud. For example, a user may respond by pressing a key on the telephone keypad which would send a DTMF signal back to the mobile switching center. The user's response is evaluated and an appropriate response is taken such as terminating use of the account.

These and other advantages of the invention will be apparent to those of ordinary skill in the art by reference to the following detailed description and the accompanying drawings.

### Brief Description of the Drawings

Fig. 1 shows a wireless communication network in which the present invention may be implemented.
Fig. 2 shows the format of a call detail record table.
Fig. 3 is a flowchart of the steps performed by the MSC during mobile telephone call origination in accordance with the present invention.
Fig. 4 is a flowchart of the steps performed by the MSC during mobile telephone call termination in accordance with the present invention.
Figs. 5-8 show exemplary contents of the call detail record table in conjunction with an example of how fraud may be detected in conjunction with the aspects of the present invention

### Detailed Description

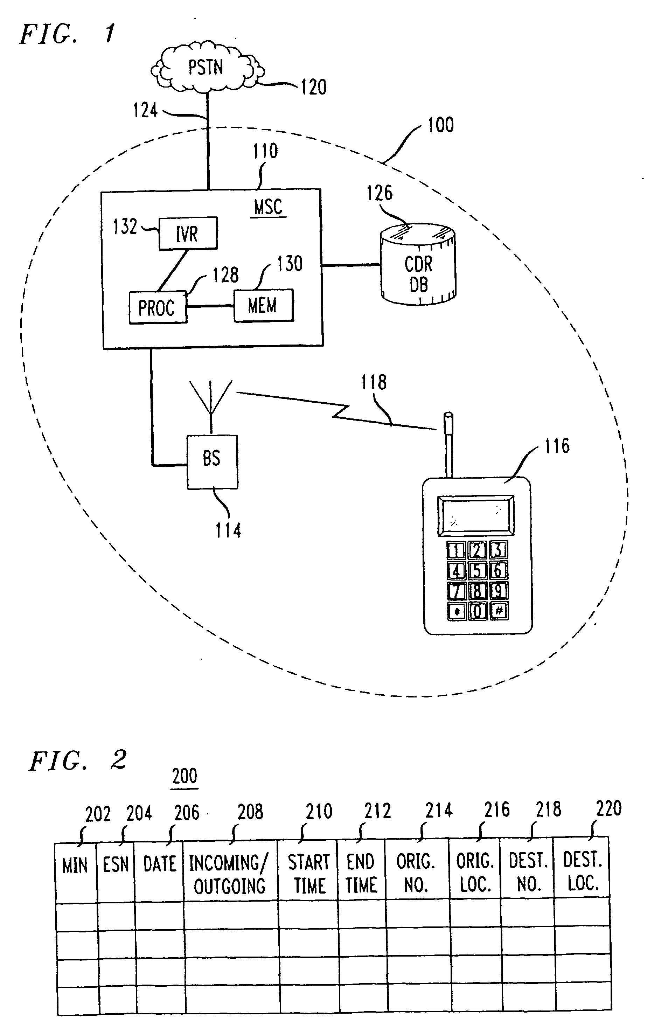

The present invention may be implemented in a wireless communication network, such as network 100 shown in Fig. 1. Wireless communication network 100 comprises a base station (BS) 114 connected to a mobile switching center (MSC) 110. The MSC 110 is further connected to a call detail record (CDR) database (DB) 126. The MSC 110 connects the wireless communication network 100 to the public switched telephone network (PSTN) 120 via communication link 124. As is well known, wireless communication networks, such as network 100, generally contain a plurality of base stations, each of which communicates with mobile stations within the geographic serving area (cell) of the base station. The geographic area of all cells taken together is the coverage area of the wireless communication network. The cell within which a mobile station is operating is called the serving cell, and the base station within the serving cell is called the serving base station. Each base station is connected to, and controlled by, an MSC. The MSC which is connected to the serving BS is the serving MSC. Depending on the architecture, a wireless communication network may have more than one MSC, with each MSC controlling a plurality of BSs. The MSC connects the wireless communication network to other networks, such as the PSTN, other wireless networks, and other data networks (e.g. Internet).

For ease of illustration, Fig. 1 shows one MSC 110 connected to one BS 114. As shown in Fig. 1, a mobile telephone 116 is communicating with serving BS 114 via a wireless communication channel 118. The protocol of the wireless communication channel 118 may be, for example, the air interface described by *TIA*/*EIA Interim Standard IS-136.1*, *800 MHz TDMA Communication - Radio Interface - Mobile Station - Base Station Compatibility - Digital Control Channel,* December 1994, Telecommunications Industry Association (hereinafter "IS-136"). Of course, the principles of the present invention are not limited to use in systems which operate in accordance with any particular wireless protocol. The principles of the present invention may be applied to any type of wireless system (e.g. code division multiple access (CDMA), satellite, global system for mobile communications (groupe speciale mobile) (GSM), advanced mobile phone service (AMPS), fixed wireless). One skilled in the art could readily apply the teachings herein to other wireless systems.

As is well known, the MSC 110 is an intelligent switching device and contains a processor 128 connected to memory 130. Memory 130 contains computer program instructions which are executed by the processor 128 which control the operation of the MSC 110 in accordance with the method of the present invention. The memory 130 may be a RAM, ROM, magnetic disk, optical disk, or other type of computer storage medium. Further, memory 130 may be some combination of such computer storage media. The MSC also comprises an interactive voice response (IVR) unit 132 which is used to generate voice messages to mobile telephones and for receiving signals (voice or DTMF) from mobile telephones. In other embodiments the IVR 132 could be implemented as a stand alone piece of equipment appropriately connected to the MSC 110. MSC 110 may also contain other components for carrying out other functions of the MSC (e.g. routing) but such other components are not described herein and would be well known to one skilled in the art. Although the functions of MSC 110 have been described herein as being controlled by processor 128 executing stored computer program instruction, it is to be understood that such functions could also be carried out by hardware, or a combination of software and hardware.

The CDR DB 126 stores call detail information for all of the mobile telephones which have wireless communication network 100 as their home system. As is well known, mobile telephones are each assigned to a home network, which is the network in which the telephone normally operates. The home network also stores subscriber profile and other information about the mobile telephone. Thus, for each telephone which has network 100 as its home network, the CDR DB 126 stores call detail information for the last call in which the telephone engaged in a CDR table. The format of the CDR table 200 is shown in Fig. 2.

The table 200 contains columns 202-220 which contain information on the MIN of the telephone (202), the ESN of the telephone (204), the date of the last call (206), whether the last call was incoming or outgoing (208), the start time of the last call (210), the end time of the last call (212), the originating telephone number of the last call (214), the location of the originating telephone (216), the destination telephone number of the last call (218), and the location of the destination telephone (220). For each mobile telephone which has network 100 as its home network, a record will be stored in table 200.

The records in table 200 are created and updated by the MSC 110 as it handles calls for each of the mobile telephones. All of the information to be entered in the records can be determined by the MSC 110 in a well known manner. The MSC 110 knows the MIN and ESN of all mobile telephones which are active in the network 100. The MSC 110 can determine whether a particular call was placed by a particular mobile telephone (outgoing), or whether a call was placed to a particular mobile telephone (incoming). The MSC 110 has an internal clock which allows it to determine the start and end time of the call.

If the mobile telephone placed the call, then the originating telephone number is the MIN of the mobile telephone. The originating location can be determined by the MSC 110 determining which base station the mobile telephone was communicating with when the call was placed and looking up the location of that base station in an internal lookup table. The destination number consists of the digits dialed by the mobile telephone and transmitted to the MSC 110 when the mobile telephone initiated the call. The destination location can be determined by the MSC 110 performing a lookup to an internal location table using the area code and three digit exchange of the dialed number. If the destination telephone is a mobile telephone, then the entry in column 220 of table 200 may contain "mobile".

If the call was an incoming call to the mobile telephone, then the originating number is the telephone number of the telephone calling the mobile telephone. This telephone number can be determined in a well known manner using automatic number identification (ANI). The originating location can be determined by the MSC 110 performing a lookup to an internal location table using the area code and three digit exchange of originating telephone number. If the originating telephone is a mobile telephone, then the entry in column 214 of table 200 may contain "mobile". The destination number is the telephone number of the mobile telephone to which the call was placed. The destination location can be determined by the MSC 110 determining which base station the mobile telephone was communicating with when the incoming call was received and looking up the location of that base station in an internal lookup table.

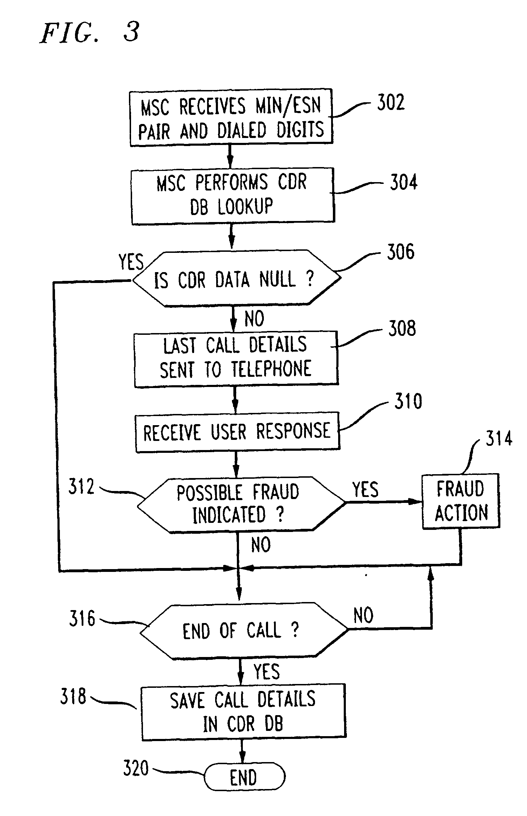

The steps performed by the MSC 110 during mobile telephone call origination in accordance with the present invention are shown in the flowchart of Fig. 3. During mobile telephone call origination, the mobile telephone 116 transmits its MIN / ESN pair along with the dialed telephone number to the MSC 110 via the BS 114 and air interface 118. The MSC 110 receives the MIN / ESN pair and the dialed digits in step 302. In step 304 the MSC 110 performs a database lookup to CDR DB 126 using the MIN / ESN pair to retrieve the last call record from the CDR table 200. In step 306 it is determined whether the CDR record retrieved in step 304 is null. This would be the case, for example, when a new telephone is activated because there is no last call information. If the data is null, then control passes to step 316, discussed below. If the data is not null, then in step 308 the MSC 110 sends last call details to the mobile telephone 116 via BS 114 and air interface 118.

The information sent to the mobile telephone includes some, or all, of the information from the last call record retrieved from the CDR table 200. Preferably, enough information is sent to mobile telephone 116 so that the user may easily identify the last call the mobile telephone 116 was engaged in. With respect to the format of the message, there are various options. Preferably, the message takes the form of a text message that is sent to the mobile telephone 116 and displayed on a textual display on the mobile telephone. Such a text message may be a short message service (SMS) message as defined by the IS-136 standard. Alternatively, the message may take the form of a voice message which is transmitted to the mobile telephone 116 over a voice channel. In accordance with such an embodiment, the MSC 110 activates the IVR unit 132 to generate an appropriate voice message based on the information retrieved from the CDR table 200 in step 304.

Upon receipt of the message, the user of mobile telephone 116 will review the last call information. The message will ask the user to respond with an indication as to whether the last call information corresponds with the user's last use of mobile telephone 116. The user's response is received in step 310 and evaluated in step 312. If the user responds with a "yes," then it indicates that no fraud was indicated and control is passed to step 316. If the user responds with a "no," then it indicates that possible fraud was detected and the MSC 110 takes appropriate action in step 314. Such action may include sending a message to a customer care center whereby the possible fraud can be investigated, terminating all use on the mobile telephone's account, or any other action which the service provider deems appropriate in the situation. After the appropriate fraud action is performed control is passed to step 316. As represented by step 316, the MSC 110 waits until the call has ended. When the call ends, the details of the call are stored in the CDR DB in step 318. The method ends in step 320.

There are other possibilities for user interaction with the system to indicate fraud. For example, the user can be asked to only respond if the last call information does not correspond with the user's last use of mobile telephone 116. Since the majority of responses from the user will indicate no fraud, this alternative saves air interface resources. In this case, the test in step 312 will interpret no response as no fraud indicated and will pass control to step 316.

There are also various implementations for step 310 of receiving the user response. For example, the user may respond by pressing a key on the telephone keypad which would send a DTMF signal back to the MSC 110. Other types of responses include two way paging and voice.

Those skilled in the art will recognize that there are many alternatives with respect to the message sent to the user, the format of such a message, the type of response requested of the user, and the format of such a response. In all of these alternatives, the basic notion is that the user is being supplied with information regarding the last use of the telephone and is being asked to identify possible fraud to the network.

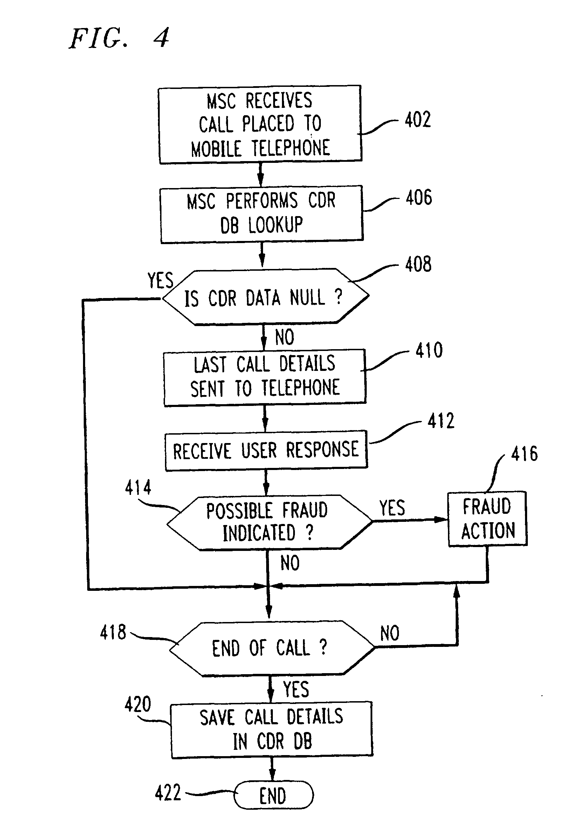

The steps performed by the MSC 110 during mobile telephone call termination (i.e. incoming call) in accordance with the present invention are shown in the flowchart of Fig. 4. In this situation, the mobile telephone 116 is the recipient of a telephone call placed by some other telephone. In step 402, the MSC 110 receives a call which is placed to mobile telephone 116. For example, the call may be one placed from a landline telephone and received from the PSTN 120. The receipt of such a call will include the MIN of the mobile telephone 116. Since the mobile telephone 116 is registered with the wireless network, the MSC 110 will have already determined the ESN of the mobile telephone. At this point the MSC has the ESN / MIN pair for mobile telephone 116. Steps 406 through 422 are performed in the same manner as corresponding steps 304-320 discussed above in conjunction with Fig. 3.

It is noted that the flowcharts of Figs. 3 and 4 show only those steps performed by the MSC 110 that related to the present invention. MSC 110 will also perform other steps related to call processing with respect to mobile telephone call origination and call termination. Such other steps include the steps necessary to set up and manage a wireless telephone call and are well known and will not be described further herein. The steps of Figs. 3 and 4 may be performed by the MSC before, during, or after such other steps.

The flowcharts of Figs. 3 and 4 show the steps of an embodiment in which the message is sent to the telephone (steps 308 and 410) prior to the voice call being set up. Such an embodiment assumes that a user response will be received (steps 310 and 412) prior to the end of the call, which is checked for in steps 316 and 418. Such an implementation is useful where the message sent to the telephone is in the form of a text message sent to a display of the telephone. In such a case, the user could review the text message and respond fairly quickly, thus only delaying the telephone call for several seconds. Of course, other embodiments are possible. If the message sent to the telephone is in the format of a voice message it may be impractical to send such a message prior to the telephone call because of the longer delay involved. In such a case, the steps of the method could be rearranged such that the message is sent, and the reply received, after the call has terminated. In yet another possibility, the message could be sent to the telephone prior to the telephone call being set up, but a response from the user of the telephone call could be received after, or even during, the telephone call. Thus, one skilled in the art could rearrange the order of the steps of the methods shown in Figs. 3 and 4 and still fall within the contemplated scope of the invention.

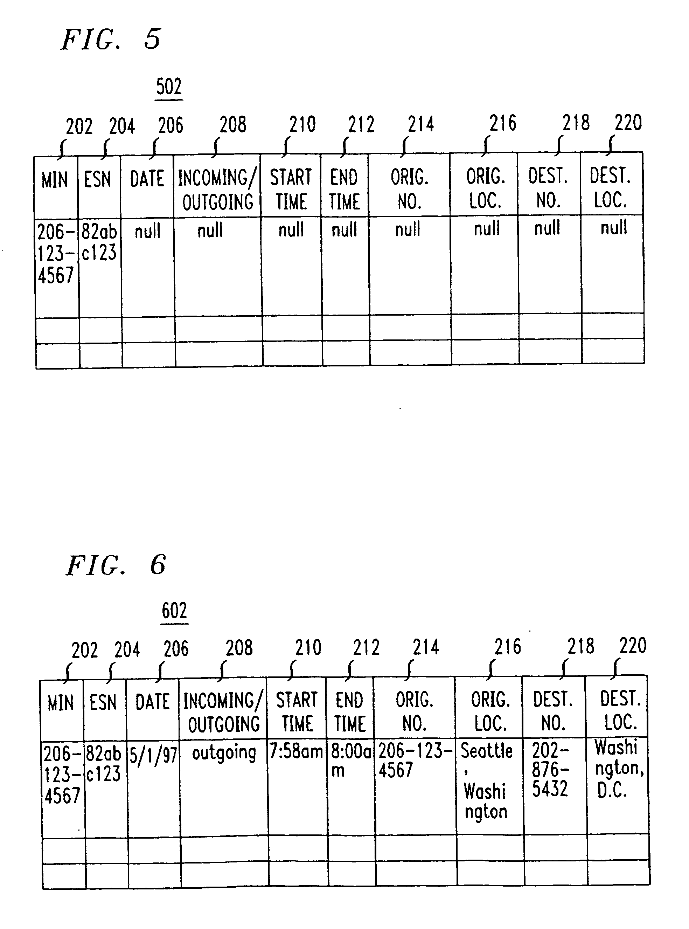

Figs. 5-8 show exemplary contents of the CDR table 200 in conjunction with an example of how fraud may be detected in conjunction with the aspects of the present invention. Consider a new telephone subscriber who activates a mobile telephone with a MIN of 206-123-4567 and an ESN of 82abc123. Prior to use, a CDR record 502 would be as shown in Fig. 5. The MIN and ESN fields, 202 and 204 respectively, contain the MIN / ESN pair of the mobile telephone. The remaining fields 206-220, are null, because there is no last call information to store. Assume that at 7:58am on May 1, 1997 the subscriber places a legitimate call to telephone number 202-876-5432 in Washington D.C. In accordance with the mobile telephone call origination steps of Fig. 3, in step 302 the MSC would receive the MIN / ESN pair of the mobile telephone and the dialed digits. In step 304 the MSC 110 performs a CDR DB 126 lookup. Since this is the first call placed by a newly activated telephone, the CDR record 502 contains null information and the test in step 306 causes control to pass to step 316. The MSC 110 waits for the call to end. Assume that the call ends at 8:00am. At that time, in accordance with step 318, a CDR record 602, which replaces CDR record 502, is created in the CDR DB 126 as shown in Fig. 6. The method ends at step 320.

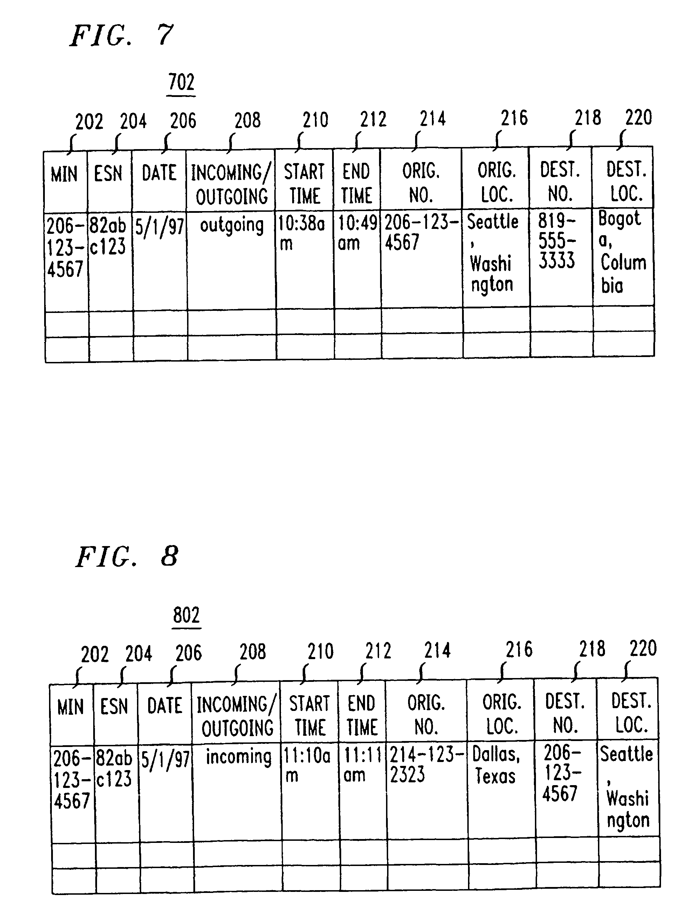

Assume now that at 10:38am a fraudulent call is placed using the legitimate MIN / ESN pair of MIN=206-123-4567 and ESN=82abc 123. This call is placed to telephone number 819-555-3333 in Bogota, Columbia. Returning to the steps of Fig. 3, the MSC 110 receives the MIN / ESN pair and the dialed digits in step 302. In step 304 the MSC 110 performs a CDR DB 126 lookup and retrieves record 602 from the CDR DB 126. The test of step 306 indicates that the data is not null and in step 308 a message containing the call detail information from record 602 is sent to the fraudulent mobile telephone. Presumably, the person making the fraudulent telephone call will respond to the message indicating that the call detail information does not indicate possible fraud. The MSC 110 receives the user response in step 310 and in step 312 control is passed to step 316 where the MSC I 10 waits for the call to terminate. Assuming the call terminates at 10:49am, control will pass to step 318 and a CDR record 702, which replaces CDR record 602, is created in the CDR DB 126 as shown in Fig. 7. The method ends at step 320.

Assume now that an incoming call is received at the legitimate mobile telephone at 11:10am on May 1, 1997 from telephone number 214-123-2323 in Dallas, Texas. At the time the call is placed, the CDR table 200 contains record 702 which has the call details of the fraudulent call. In accordance with the steps of Fig. 4, the MSC 110 receives the incoming call at step 402 and determines the ESN of the mobile telephone in step 404. In step 406 the MSC 110 performs a CDR DB 126 lookup and retrieves record 702 from the CDR DB 126. The test of step 408 indicates that the data is not null and in step 410 a message containing the call detail information from record 702 is sent to the legitimate mobile telephone. The legitimate user will notice that the call details do not correspond to the last legitimate use of the mobile telephone and will respond accordingly. The MSC 110 receives the user response in step 412 and in step 414 control is passed to step 416 where the MSC 110 takes appropriate fraud action. Control passes to step 418 and the MSC 110 waits for the call to terminate. Assuming the call terminates at 11:11am, control will pass to step 420 and a CDR record 802, which replaces CDR record 702, is created in the CDR DB 126 as shown in Fig. 8. The method ends at step 422.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope of the invention as defined in the appended claims. For example, the above description described an embodiment in which a message containing prior call data is sent to the telephone the next time the telephone engages in a telephone call. In another embodiment, prior call data may be sent to a telephone when the telephone is powered on and registers with the system.

## Claims

1. A method for detecting fraud on a wireless subscriber account where a wireless system sends information about a previous communication to a wireless device in order to aid in identifying fraudulent communications, the method being **characterised by**:
storing in a database (126) connected to a mobile switching center MSC (110) data identifying a first wireless system access using said subscriber account;
transmitting said data from the MSC to a wireless device (116) during a second wireless system access using said subscriber account; and
receiving at the MSC from said wireless device data indicating said first wireless system access was fraudulent.

2. The method of claim 1 wherein:
said first wireless system access is a telephone call; and
said second wireless system access is a telephone call.

3. The method of claim 1 wherein:
said first wireless system access is a telephone call; and
said second wireless system access is wireless system registration.

4. The method of claim 1 wherein said step of transmitting further comprises the step of transmitting a text message to said wireless device.

5. The method of claim 4 wherein said step of transmitting further comprises the step of transmitting said text message via short message service.

6. The method of claim 1 wherein said step of transmitting further comprises the step of transmitting a voice message to said wireless device.

7. A wireless system for detecting fraud on a wireless subscriber account where the wireless system is adapted to send information about a previous communication to a wireless device in order to aid in identifying fraudulent communications, the wireless system being **characterised by** comprising:
a database (126) containing data comprising wireless system accesses associated with subscriber accounts;
a mobile switching center MSC (110) communicating with the database and plural wireless devices (116), and comprising means for :
receiving by the MSC a first service request including subscriber account information from a first wireless device;
storing by the MSC data identifying said first service request in the database;
receiving by the MSC a second device request including said subscriber account information from a second wireless device;
retrieving by the MSC from said database said data identifying said first service request;
transmitting by the MSC at least a portion of said data identifying said first service request to said second wireless device; and
receiving by the MSC from said second wireless device, data indicating that said first service request was fraudulent.

8. The wireless system of claim 7 wherein said first and second wireless devices are the same device.

9. The wireless system of claim 7 wherein said first and second wireless devices are different devices.

## Patentansprüche

1. Verfahren zum Erfassen eines Betrugs auf einem Konto für einen drahtlosen Teilnehmer, bei dem ein drahtloses System Information über eine frühere Kommunikation zu einer drahtlosen Einrichtung sendet, um die Identifizierung von betrügerischen Kommunikationen zu unterstützen, wobei das Verfahren durch die folgenden Schritte **gekennzeichnet** ist:
Speichern von Daten, die einen ersten Zugriff für das drahtlose System unter Verwendung des Teilnehmerkontos identifizieren, in einer Datenbank (126), die mit einem Mobilvermittlungszentrum MSC (110) verbunden ist;
Übertragen der Daten von dem MSC an eine drahtlose Einrichtung (116) während eines zweiten Zugriffs für das drahtlose System unter Verwendung des Teilnehmerkontos; und
Empfangen, an dem MSC, von Daten, die anzeigen, dass der erste Zugriff für das drahtlose System betrügerisch war, von der drahtlosen Einrichtung.

2. Verfahren nach Anspruch 1, wobei:
der erste Zugriff für das drahtlose System ein Telefonanruf ist; und
der zweite Zugriff für das drahtlose System ein Telefonanruf ist.

3. Verfahren nach Anspruch 1, wobei:
der erste Zugriff für das drahtlose System ein Telefonanruf ist; und
der zweite Zugriff für das drahtlose System eine Registrierung für das drahtlose System ist.

4. Verfahren nach Anspruch 1, wobei der Schritt zum Übertragen ferner den Schritt zum Übertragen einer Textnachricht an die drahtlose Einrichtung umfasst.

5. Verfahren nach Anspruch 4, wobei der Schritt zum Übertragen weiter den Schritt zum Übertragen der Textnachricht über einen Kurznachrichtendienst umfasst.

6. Verfahren nach Anspruch 1, wobei der Schritt zum Übertragen ferner den Schritt zum Übertragen einer Sprachnachricht an die drahtlose Einrichtung umfasst.

7. Drahtloses System zum Erfassen eines Betrugs auf einem Konto für einen drahtlosen Teilnehmer, bei dem das drahtlose System dafür ausgelegt ist, um Information über eine frühere Kommunikation zu einer drahtlosen Einrichtung zu senden, um eine Identifikation von betrügerischen Kommunikation zu unterstützten, wobei das drahtlose System **dadurch gekennzeichnet ist, dass** es umfasst:
eine Datenbank (126), die Daten enthält, die Zugriffe für das drahtlose System im Zusammenhang mit Teilnehmerkonten umfassen;
ein Mobilvermittlungszentrum MSC (110), das mit der Datenbank und mehreren drahtlosen Einrichtungen (116) kommuniziert, und umfassend eine Einrichtung zum:
Empfangen, durch das MSC, einer ersten Dienstaufforderung, die eine Teilnehmerkontoinformation einschließt, von einer drahtlosen Einrichtung;
Speichern, durch das MSC, von Daten, die die erste Dienstaufforderung in der Datenbank identifiziert;
Empfangen, durch das MSC, einer zweiten Einrichtungsaufforderung, die die Teilnehmerkontoinformation einschließt, von einer zweiten drahtlosen Einrichtung;
Auslesen, durch das MSC, der Daten, die die erste Dienstaufforderung identifizieren, aus der Datenbank;
Übertragen, durch das MSC, wenigstens eines Abschnitts der Daten, die die erste Dienstaufforderung identifizieren, an die zweite drahtlose Einrichtung; und
Empfangen, durch das MSC, von Daten, die anzeigen, dass die erste Dienstaufforderung betrügerisch war, von der zweiten drahtlosen Einrichtung.

8. Drahtloses System nach Anspruch 7, wobei die erste und zweite drahtlose Einrichtung die gleiche Einrichtung sind.

9. Drahtloses System nach Anspruch 7, wobei die erste und zweite drahtlose Einrichtung unterschiedliche Einrichtungen sind.

## Revendications

1. Procédé pour détecter une fraude sur un compte d'abonné sans fil où un système sans fil envoie une information concernant une communication précédente à un dispositif sans fil afin d'aider à identifier des communications frauduleuses, le procédé étant
**caractérisé par**:
le stockage, dans une base de données (126) qui est connectée à un centre de commutation de mobile MSC (110), de données qui identifient un premier accès de système sans fil en utilisant ledit compte d'abonné;
l'émission desdites données depuis le MSC jusqu'à un dispositif sans fil (116) pendant un second accès de système sans fil en utilisant ledit compte d'abonné; et
la réception au niveau du MSC, en provenance dudit dispositif sans fil, de données qui indiquent que ledit premier accès de système sans fil a été frauduleux.

2. Procédé selon la revendication 1, dans lequel:
ledit premier accès de système sans fil est un appel téléphonique; et
ledit second accès de système sans fil est un appel téléphonique.

3. Procédé selon la revendication 1, dans lequel:
ledit premier accès de système sans fil est un appel téléphonique; et
ledit second accès de système sans fil est un enregistrement de système sans fil.

4. Procédé selon la revendication 1, dans lequel ladite étape d'émission comprend en outre l'étape d'émission d'un message de texte sur ledit dispositif sans fil.

5. Procédé selon la revendication 4, dans lequel ladite étape d'émission comprend en outre l'étape d'émission dudit message de texte via un service de message court.

6. Procédé selon la revendication 1, dans lequel ladite étape d'émission comprend en outre l'étape d'émission d'un message vocal sur ledit dispositif sans fil.

7. Système sans fil pour détecter une fraude sur un compte d'abonné sans fil où le système sans fil est adapté pour envoyer une information concernant une communication précédente à un dispositif sans fil afin d'aider à l'identification de communications frauduleuses, le système sans fil étant **caractérisé en ce qu'**il comprend:
une base de données (126) qui contient des données comprenant des accès de système sans fil qui sont associés à des comptes d'abonné;
un centre de commutation de mobile MSC (110) qui communique avec la base de données et avec plusieurs dispositifs sans fil (116), et comprenant des moyens pour:
recevoir par le MSC une première requête de service qui inclut une information de compte d'abonné en provenance d'un premier dispositif sans fil,
stocker au moyen du MSC les données qui identifient ladite première requête de service dans la base de données;
recevoir par le MSC une seconde requête de dispositif qui inclut ladite information de compte d'abonné en provenance d'un second dispositif sans fil;
retrouver au moyen du MSC, à partir de ladite base de données, lesdites données qui identifient ladite première requête de service;
émettre au moyen du MSC au moins une partie desdites données qui identifient ladite première requête de service sur ledit second dispositif sans fil; et
recevoir au moyen du MSC en provenance dudit second dispositif sans fil des données qui indiquent que ladite première requête de service a été frauduleuse.

8. Système sans fil selon la revendication 7, dans lequel lesdits premier et second dispositifs sans fil sont le même dispositif.

9. Système sans fil selon la revendication 7, dans lequel lesdits premier et second dispositifs sans fil sont des dispositifs différents.
